# EUROPEAN PATENT APPLICATION

(11) **EP 4 641 649 A1**
(43) Date of publication of application: **29.10.2025**
(21) Application number: 25163178.4
(22) Date of filing: 12.03.2025
(51) Int. Cl.: H01M 4/04, H01M 4/133, H01M 4/1393, H01M 4/587, H01M 4/62, H01M 10/0525

(54) **NEGATIVE ELECTRODES FOR RECHARGEABLE LITHIUM BATTERIES, MANUFACTURING METHODS OF THE SAME, AND RECHARGEABLE LITHIUM BATTERIES INCLUDING THE SAME**

(30) Priority: 23.04.2024 KR 20240054303
(71) Applicant: SAMSUNG SDI CO., LTD., Yongin-si, Gyeonggi-do 17084 (KR)
(72) Inventor: ARIKAWA, Yuuya, Yongin-si, Gyeonggi-do 17084 (KR)
(74) Representative: Michalski Hüttermann & Partner Patentanwälte mbB

(57) **Abstract**

Disclosed are a negative electrode for a rechargeable lithium battery, a method of manufacturing negative electrode, and a rechargeable lithium battery including the negative electrode. The negative electrode includes a negative electrode current collector, and a negative electrode active material layer located on the negative electrode current collector and including a negative electrode active material and a binder. The negative electrode active material includes a core including a material capable of reversibly intercalating and deintercalating lithium ions; a surface treatment layer located on a surface of the core and including a compound.

## Description

### CROSS-REFERENCE TO RELATED APPLICATION

This application claims the benefit of priority to Korean Patent Application No. 10-2024-0054303 filed in the Korean Intellectual Property Office on April 23, 2024, the entire contents of which are incorporated herein by reference.

### BACKGROUND

### 1. Field

Negative electrodes for rechargeable lithium batteries, methods of manufacturing negative electrodes, and rechargeable lithium batteries including negative electrodes are disclosed.

### 2. Description of the Related Art

A rechargeable lithium battery may be recharged, and may have three or more times an energy density per unit weight compared to a conventional lead storage battery, nickel-cadmium battery, nickel hydrogen battery, nickel zinc battery and the like. The rechargeable lithium battery may also be charged at a high rate and thus, is commercially manufactured for a laptop, a cell phone, an electric tool, an electric bike, and the like.

Such a rechargeable lithium battery is manufactured by injecting an electrolyte solution into an electrode assembly, which includes a positive electrode including a positive electrode active material capable of intercalating/deintercalating lithium ions, and a negative electrode including a negative electrode active material capable of intercalating/deintercalating lithium ions.

The negative electrode may be manufactured by coating a negative electrode slurry including a solvent, a negative electrode active material, and a binder on a negative electrode current collector. and subsequently drying and compressing the negative electrode. Herein, when the binder migrates during the drying process, the negative electrode may have a negative electrode active material layer in which the binder is non-uniformly distributed.

Such a negative electrode with a negative electrode active material layer in which a binder is non-uniformly distributed typically exhibits high ion resistance (Rᵢₒₙ), and therefore may deteriorate the rate capability and other properties of a rechargeable lithium battery.

### SUMMARY

Some example embodiments include a negative electrode for a rechargeable lithium battery in which the binder in the negative electrode active material layer is substantially uniformly distributed.

Some example embodiments include a negative electrode for a rechargeable lithium battery including a negative electrode current collector, and a negative electrode active material layer located on the negative electrode current collector and including a negative electrode active material and a binder, wherein the negative electrode active material includes a core including a material capable of reversibly intercalating and deintercalating lithium ions; a surface treatment layer located on a surface of the core and including a compound represented by Chemical Formula 1:

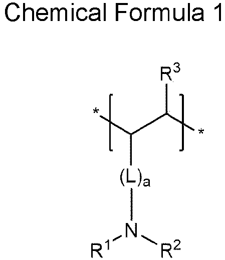

Some example embodiments include a rechargeable lithium battery including the negative electrode for the rechargeable lithium battery.

In the negative electrode for a rechargeable lithium battery according to one example embodiment, the binder is substantially uniformly distributed within the negative electrode active material layer, thereby reducing or suppressing an increase in ion resistance (Rᵢₒₙ) and improving rate capability of the rechargeable lithium battery.

### BRIEF DESCRIPTION OF THE DRAWINGS

FIGS. 1 to 4 are schematic views illustrating rechargeable lithium batteries according to some example embodiments.
FIG. 5 is an SEM photograph of the negative electrode of Example 1 magnified 20,000 times, and FIG. 6 is an SEM photograph of the negative electrode of Example 1 magnified 50,000 times.
FIG. 7 is an SEM photograph of the negative electrode of Comparative Example 1 magnified 20,000 times, and FIG. 8 is an SEM photograph of the negative electrode of Comparative Example 1 magnified 50,000 times.

### DETAILED DESCRIPTION

Hereinafter, example embodiments will be described in detail. However, these embodiments are examples, the present disclosure is not limited thereto, and the present disclosure is defined by the scope of claims.

As used herein, when a specific definition is not otherwise provided, it will be understood that when an element such as a layer, film, region, or substrate is referred to as being "on" another element, the element can be directly on the other element, or intervening elements may also be present.

As used herein, when a specific definition is not otherwise provided, the singular may also include the plural. In addition, unless otherwise specified, "A or B" may mean "including A, including B, or including A and B."

As used herein, "combination thereof" may mean a mixture, a stack, a composite, a copolymer, an alloy, a blend, and a reaction product of constituents.

As used herein, when a specific definition is not otherwise provided, "substituted" refers to replacement of at least one hydrogen atom of a compound by a substituent including at least one of a halogen atom (F, Cl, Br, or I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, or a combination thereof.

As used herein, when specific definition is not otherwise provided, "heterocycloalkyl group," "heterocycloalkenyl group," "heterocycloalkynyl group," and "heterocycloalkylene group" means that at least one heteroatom of N, O, S or P is present in the ring compound of cycloalkyl, cycloalkenyl, cycloalkynyl, and cycloalkylene, respectively.

In chemical formulas of the present specification, unless a specific definition is otherwise provided, hydrogen is bonded at the position when a chemical bond is not drawn.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Negative Electrode

Some example embodiments include a negative electrode for a rechargeable lithium battery that includes a negative electrode current collector, and a negative electrode active material layer located on the negative electrode current collector and including a negative electrode active material and a binder. The negative electrode active material includes a core including a material capable of reversibly intercalating and deintercalating lithium ions, a surface treatment layer located on a surface of the core and including a compound represented by Chemical Formula 1:

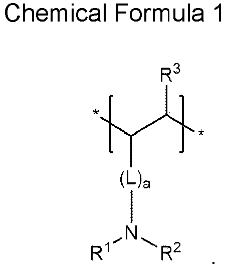

In the negative electrode for a rechargeable lithium battery according to some example embodiments, the binder is substantially uniformly distributed within the negative electrode active material layer, thereby reducing or suppressing an increase in ion resistance (Rᵢₒₙ), and improving the rate capability of the rechargeable lithium battery.

Hereinafter, a negative electrode for a rechargeable lithium battery according to some example embodiments will be described in detail.

### Negative Electrode Active Material

Some example embodiments include a negative electrode active material (hereinafter, "negative electrode active material according to some example embodiments") which includes a core including a material capable of reversibly intercalating and deintercalating lithium ions, a surface treatment layer located on a surface of the core and including a compound represented by Chemical Formula 1.

In the surface treatment layer, the compound represented by Chemical Formula 1 is an amphipathic compound and includes a nonpolar main chain and a polar side chain. In detail, the nonpolar main chain includes an ethylene group, and the polar side chain includes an amino group (*-N(R¹)(R²)).

Compared to the carboxyl group (*-COOH), the amino group (*-N(R¹)(R²)) as the polar side chain interacts with negative electrode active materials, binders, thickeners, etc. and is readily absorbable.

Accordingly, when the negative electrode active material according to some example embodiments is prepared in a solvent and subsequently mixed with a binder, the binder does not move in the next process, the drying process, and a negative electrode for a rechargeable lithium battery with substantially uniform distribution of the binder in the negative electrode active material layer can be obtained.

A description of the manufacturing process, and of the compounds constituting the surface treatment layer, is provided in detail below.

### Compound Represented by Chemical Formula 1

In Chemical Formula 1 illustrated above, R¹ to R³ may each independently be or include at least one of a hydrogen atom, a halogen atom, a substituted or unsubstituted alkyl group having 1 to 20 carbon atoms, a substituted or unsubstituted aryl group having 6 to 20 carbon atoms, and a substituted or unsubstituted heterocycloalkyl group having 6 to 20 carbon atoms.

For example, R¹ to R³ may be or include all hydrogen atoms.

In Chemical Formula 1, L may be or include at least one of a single bond, a substituted or unsubstituted alkylene group having 1 to 20 carbon atoms, a substituted or unsubstituted arylene group having 6 to 20 carbon atoms, and a substituted or unsubstituted heterocycloalkylene group having 6 to 20 carbon atoms.

For example, L may be or include a substituted or unsubstituted alkylene group having 1 to 5 carbon atoms.

For example, L may be or include a methylene group.

In Chemical Formula 1, "a" may be an integer from 1 to 10.

For example, "a" may be an integer from 1 to 3.

For example, "a" may be equal to 1.

The Chemical Formula 1 may be represented by Chemical Formula 1-1:

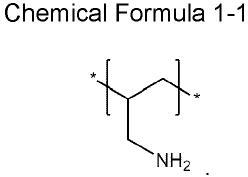

A weight average molecular weight of the compound represented by Chemical Formula 1, as measured by gel permeation chromatography (GPC), may be about 500 g/mol to about 500,000 g/mol, about 750 g/mol to about 100,000 g/mol, or about 1,000 g/mol to about 50,000 g/mol.

### Material Capable of Reversibly Intercalating and Deintercalating Lithium Ions

The core includes a material capable of reversibly intercalating and deintercalating lithium ions.

The material capable of reversibly intercalating and deintercalating lithium ions may be or include a carbon-based negative electrode active material, for example crystalline carbon, amorphous carbon or a combination thereof. The crystalline carbon may be or include graphite such as non-shaped, plate-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

### Weight ratio of Core and Surface Treatment Layer

The weight ratio of the core and the surface treatment layer may be about 99.99:0.01 to about 99:1, about 99.98:0.02 to about 99.5:0.5, or about 99.97:0.03 to about 99.75:0.25.

### Binder

The binder may be configured to attach the negative electrode active material particles to each other, and also to attach the negative electrode active material to the current collector.

The binder may include an aqueous binder.

The aqueous binder may include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinyl pyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When using the aqueous binder, the aqueous binder may further include a cellulose-based compound capable of imparting viscosity.

The cellulose-based compound may be or include at least one of carboxymethyl cellulose, hydroxypropylmethyl cellulose, methyl cellulose, an alkali metal salt thereof, or a combination thereof. The alkali metal may be or include at least one of Na, K, or Li.

### Composition of Negative Electrode Active Material Layer

Based on a total amount of 100 wt% of the negative electrode active material layer, the negative electrode active material may be included in an amount of about 90 wt% to about 99 wt%, the aqueous binder may be included in an amount of about 0.5 wt% to about 5 wt%, and the cellulose-based compound may be included in an amount of about 0.5 wt% to about 5 wt%.

### Conductive Material

The negative electrode active material layer may further include a conductive material.

The conductive material is included to provide electrode conductivity, and any electrically conductive material may be a conductive material unless the electrically conductive material causes a chemical change. Examples of the conductive material may be or include a carbon-based material such as at least one of natural graphite, artificial graphite, carbon black, acetylene black, ketjen black, a carbon fiber, a carbon nanofiber, a carbon nanotube, and the like; a metal-based material such as copper, nickel, aluminum silver, and the like in a form of a metal powder or a metal fiber; a conductive polymer such as a polyphenylene derivative; or a mixture thereof.

Based on a total amount of 100 wt% of the negative electrode active material layer, the conductive material may be included in an amount of about 0.01 wt% to about 5 wt%.

### Negative Electrode Current Collector

The negative electrode current collector may include at least one of a copper foil, a nickel foil, a stainless steel foil, a titanium foil, a nickel foam, a copper foam, a polymer substrate coated with a conductive metal, and a combination thereof, but is not limited thereto.

### Method of Manufacturing Negative Electrode

Some example embodiments include a method of manufacturing a negative electrode for a rechargeable lithium battery, the method including mixing a material capable of reversibly intercalating and deintercalating lithium ions and a compound represented by Chemical Formula 1 in a solvent to prepare a first negative electrode slurry, mixing the first negative electrode slurry and a binder to prepare a second negative electrode slurry, coating the second negative electrode slurry onto the negative electrode current collector, and drying the second negative electrode slurry coated on the negative electrode current collector:

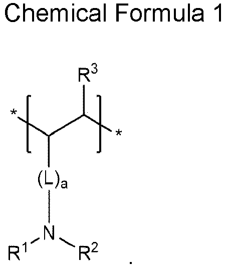

Through the method for manufacturing a negative electrode according to some example embodiments, the negative electrode according to the above-described example embodiment can be manufactured.

Hereinafter, a method of manufacturing a negative electrode according to an example embodiment will be described in detail below, excluding descriptions that overlap with the above-described contents.

### Preparation Process of First Negative Electrode Slurry

A method for manufacturing a negative electrode according to an example embodiment may include mixing a material capable of reversibly intercalating and deintercalating lithium ions and a compound represented by Chemical Formula 1 in a solvent to prepare a first negative electrode slurry.

According to the preparation process of the first negative electrode slurry, a negative electrode active material is prepared, in which a material capable of reversibly intercalating and deintercalating the lithium ions is the core and a surface treatment layer including the compound represented by Chemical Formula 1 is formed on the core.

The solvent may be water. When water is the solvent, an aqueous binder can be the binder.

A weight ratio of the material capable of reversibly intercalating and deintercalating lithium ions and the compound represented by Chemical Formula 1 may be about 99.99:0.01 to about 99:1, about 99.98:0.02 to about 99.5:0.5, or about 99.97:0.03 to about 99.75:0.25. According to this, the weight ratio of the core and the surface treatment layer described above can be satisfied.

### Preparation Process of Second Negative Electrode Slurry

The method for manufacturing a negative electrode according to some example embodiments may further include mixing the first negative electrode slurry and a binder to prepare a second negative electrode slurry.

After the preparation process of the first negative electrode slurry, the binder is mixed without removing the solvent.

The binder may include an aqueous binder. When using the aqueous binder, the aqueous binder may further include a cellulose-based compound capable of imparting viscosity. Descriptions of these types are as described above.

### Coating Process of Second Negative Electrode Slurry

The method of manufacturing a negative electrode according to some example embodiments may further include coating the second negative electrode slurry on a negative electrode current collector.

As the coating method, a method generally known in the art can be used.

### Drying Process of Second Negative Electrode Slurry

The method of manufacturing a negative electrode according to some example embodiments may further include drying the second negative electrode slurry coated on the negative electrode current collector.

When the negative electrode active material according to some example embodiments is prepared in a solvent and subsequently mixed with a binder, the binder does not move in the next drying process, and a negative electrode for a rechargeable lithium battery with substantially uniform distribution of the binder in the negative electrode active material layer is obtained.

As the drying method, a method generally known in the art can be used.

### Compression Process

The method of manufacturing a negative electrode according to some example embodiments may further include compressing the negative electrode current collector and the dried second negative electrode slurry.

Through the compressing process, the thicknesses of the negative electrode active material layer and of the negative electrode including the negative electrode active material layer can be controlled.

As the compressing method, a method generally known in the art can be used.

### (Rechargeable Lithium Battery)

Some example embodiments include a rechargeable lithium battery including a negative electrode according to the above-described example embodiment; a positive electrode; and an electrolyte solution.

The rechargeable lithium battery may improve the rate capability and other properties by using a negative electrode in which the binder is substantially uniformly distributed within the negative electrode active material layer.

Hereinafter, a rechargeable lithium battery according to some example embodiments will be described in detail, excluding descriptions that overlap with the above-mentioned contents.

### Positive Electrode Active Material

The positive electrode active material may be or include a compound (lithiated intercalation compound) capable of intercalating and deintercalating lithium. For example, one or more types of composite oxides of lithium, and a metal including at least one of cobalt, manganese, nickel, and combinations thereof may be used.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}CO_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11 Liₐ₁Niₓ₁M¹_{y1}M²_{z1}O_{2-b1}X_{b1}

In Chemical Formula 11, 0.9≤a1≤1.8, 0.3≤x1≤1, 0≤y1 ≤0.7, 0≤z1≤0.7, 0.9≤x1+y1+z1≤1.1, and 0≤b1≤0.1, M¹ and M² each independently are or include one or more of Al, B, Ba, Ca, Ce, Co, Cr, Cu, Fe, Mg, Mn, Mo, Nb, Si, Sn, Sr, Ti, V, W, and Zr, and X is one or more of F, P, and S.

In Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12 Liₐ₂COₓ₂M³_{y2}O_{2-b2}X_{b2}

In Chemical Formula 12, 0.9≤a2≤1.8, 0.7≤x2≤1, 0≤y2≤0.3, 0.9≤x2+y2≤1.1, and 0≤b2≤0.1, M³ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is one or more of F, P, and S.

Chemical Formula 13 Liₐ₃Feₓ₃M⁴_{y3}PO_{4-b3}X_{b3}

In Chemical Formula 13, 0.9≤a3≤1.8, 0.6≤x3≤1, 0≤y3≤0.4, and 0≤b3≤0.1, M⁴ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is one or more of F, P, and S.

Chemical Formula 14 Liₐ₄Niₓ₄Mn_{y4}M⁵_{z4}O_{2-b4}X_{b4}

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, M⁵ is or includes one or more element including at least one of Al, B, Ba, Ca, Ce, Cr, Fe, Mg, Mo, Nb, Si, Sn, Sr, Ti, V, W, and Zr, and X is or includes one or more of F, P, and S.

### Positive Electrode

The positive electrode for a rechargeable lithium battery may include a current collector and a positive electrode active material layer on the current collector. The positive electrode active material layer may include a positive electrode active material, and may further include a binder and/or a conductive material.

For example, the positive electrode may further include an additive that can function as a sacrificial positive electrode.

An amount of the positive electrode active material may be about 90 wt% to about 99.5 wt%, and each amount of the binder and the conductive material may be about 0.5 wt% to about 5 wt% based on 100 wt% of the positive electrode active material layer.

The binder is configured to attach the positive electrode active material particles to each other, and to attach the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material may impart conductivity (e.g., electrical conductivity) to the electrode. Any material that does not cause chemical change (e.g., does not cause an undesirable chemical change in the rechargeable lithium battery) and that conducts electrons may be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material including at least one of copper, nickel, aluminum, silver, etc., in a form of a metal powder or a metal fiber; a conductive polymer such as a polyphenylene derivative; or a mixture thereof.

The current collector may include Al, but is not limited thereto.

### Electrolyte Solution

The electrolyte solution for a rechargeable lithium battery may include a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, alcohol-based solvent, aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethylacetate, methylpropionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. The ketone-based solvent may include cyclohexanone. The alcohol-based solvent may include at least one of ethyl alcohol, isopropyl alcohol, and the like, and the aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane or 1,4-dioxolane, sulfolanes, and the like.

The non-aqueous organic solvent may be used alone or in combination of two or more solvents.

Additionally, when using a carbonate-based solvent, cyclic carbonate and chain carbonate can be mixed and used, and cyclic carbonate and chain carbonate may be mixed at a volume ratio of about 1:1 to about 1:9.

The lithium salt dissolved in the organic solvent may supply lithium ions in a battery, enable a basic operation of a rechargeable lithium battery, and improve transportation of the lithium ions between positive and negative electrodes. Examples of a lithium salt may include one or more than one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate, (LiDFOB), and lithium bis(oxalato)borate (LiBOB).

### Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be or include a polymer film formed of or including any one of a polymer, or a copolymer or mixture of two or more of polyolefin such as or including at least one of polyethylene or polypropylene, a polyester such as polyethyleneterephthalate, or polybutyleneterephthalate, polyacetal, polyamide, polyimide, polycarbonate, polyether ketone, polyaryl ether ketone, polyether imide, polyamideimide, polybenzimidazole, polyether sulfone, polyphenyleneoxide, a cyclic olefin copolymer, polyphenylenesulfide, polyethylenenaphthalate, a glass fiber, TEFLON (tetrafluoroethylene), and polytetrafluoroethylene.

The organic material may include a polyvinylidene fluoride-based polymer or a (meth)acrylic polymer.

The inorganic material may include inorganic particles including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

### Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be or include a polymer film formed of or including any one of a polymer, or a copolymer or mixture of two or more of polyolefin such as at least one of polyethylene or polypropylene, a polyester such as polyethyleneterephthalate, or polybutyleneterephthalate, polyacetal, polyamide, polyimide, polycarbonate, polyether ketone, polyaryl ether ketone, polyether imide, polyamideimide, polybenzimidazole, polyether sulfone, polyphenyleneoxide, a cyclic olefin copolymer, polyphenylenesulfide, polyethylenenaphthalate, a glass fiber, TEFLON (tetrafluoroethylene), and polytetrafluoroethylene.

The organic material may include a polyvinylidene fluoride-based polymer or a (meth)acrylic polymer.

The inorganic material may include inorganic particles including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

### Rechargeable Lithium Battery

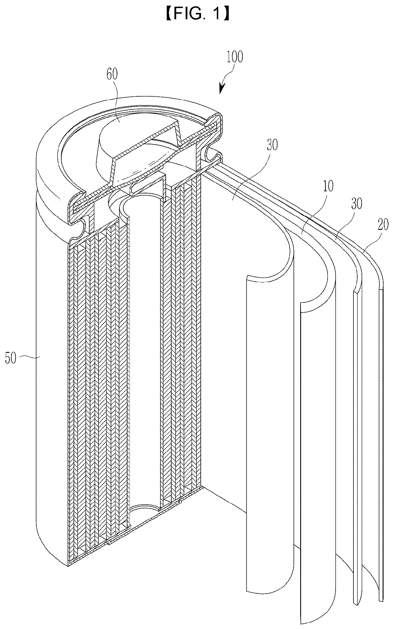

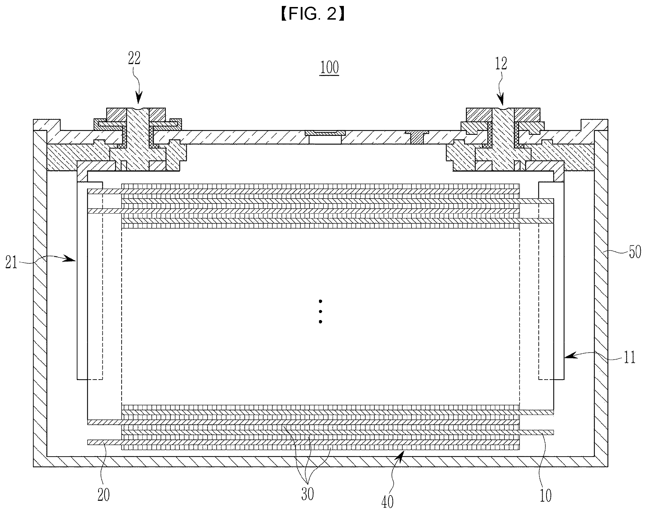

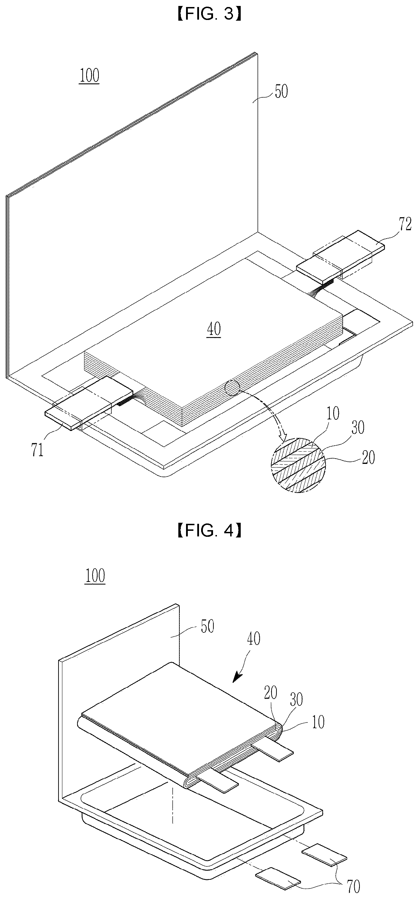

The rechargeable lithium battery may be classified into cylindrical, prismatic, pouch, or coin-type batteries, and the like depending on their shape. FIGS. 1 to 4 are schematic views illustrating a rechargeable lithium battery according to an example embodiment. FIG. 1 illustrates a circular battery, FIG. 2 illustrates a prismatic battery, and FIGS. 3 and 4 illustrate pouch-type batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 sealing the case 50 as shown in FIG. 1. In addition, in FIG. 2, the rechargeable lithium battery 100 may include a positive lead tab 11, a positive terminal 12, a negative lead tab 21, and a negative terminal 22. As shown in FIGS. 3 and 4, the rechargeable lithium battery 100 includes an electrode tab 70 illustrated in FIG. 4, that is, a positive electrode tab 71 and a negative electrode tab 72 illustrated in FIG. 3 and forming an electrical path for inducing the current formed in the electrode assembly 40 to the outside of the battery 100.

The rechargeable lithium battery according to some example embodiments may be applicable to automobiles, mobile phones, and/or various types of electrical devices, but the present disclosure is not limited thereto.

Hereinafter, examples of the present disclosure and comparative examples are described. These examples, however, are not in any sense to be interpreted as limiting the scope of the disclosure.

### Example 1

### (1) Manufacturing of Negative Electrode

### Preparation Process of First Negative Electrode Slurry

100 parts by weight of artificial graphite and 0.02 parts by weight of a compound represented by Chemical Formula 1-1 were mixed in water as a solvent to prepare a first negative electrode slurry:

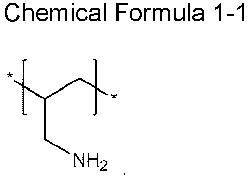

The compound represented by Chemical Formula 1-1 had a weight average molecular weight of 3,000 g/mol according to a GPC method.

The first negative electrode slurry was obtained as a negative electrode active material which had the artificial graphite as a core and a surface treatment layer including the compound represented by Chemical Formula 1-1 formed on the core surface.

### Preparation Process of Second Negative Electrode Slurry

The first negative electrode slurry was mixed with a binder to prepare a second negative electrode slurry. The second negative electrode slurry was prepared by mixing 97.3 wt% of the negative electrode active material, 0.9 wt% of carboxymethyl cellulose and 1.3 wt% of a styrene butadiene rubber, and 0.5 wt% of carbon black.

### Coating, Drying, and Compressing Processes of Second Negative Electrode Slurry

The negative electrode active material layer slurry was coated on a copper foil current collector, subsequently dried and compressed to manufacture a negative electrode.

### (2) Manufacturing of Positive Electrode

A positive electrode active material layer slurry was prepared by mixing 97.7 wt% of a LiNi_{0.8}Co_{0.1}Al_{0.1}O₂ positive electrode active material1.3 wt% of a polyvinylidene fluoride binder, and 1.0 wt% of a carbon nanotube conductive material, and was coated on an aluminum foil current collector, dried and pressed to manufacture a positive electrode.

### (3) Preparation of Electrolyte Solution

An electrolyte solution was prepared by mixing ethylene carbonate (EC), ethylmethyl carbonate (EMC), and dimethyl carbonate (DMC) in a volume ratio of 2:4:4 to prepare an organic solvent, and subsequently dissolving LiPF₆ lithium salt at a concentration of 1.15 M in the organic solvent.

### (4) Manufacturing of Rechargeable Lithium Battery Cell

An electrode assembly was manufactured by assembling the prepared negative electrode and positive electrode with a separator made of polyethylene with a thickness of 12 µm, the electrode assembly was accommodated in an aluminum laminate pouch-type case, and the electrolyte solution was injected to manufacture a rechargeable lithium battery cell.

### Example 2

A negative electrode and a rechargeable lithium battery cell were manufactured in the same manner as in Example 1 with a difference that 100 parts by weight of artificial graphite and 0.05 parts by weight of the compound represented by Chemical Formula 1-1 were mixed.

### Example 3

A negative electrode and a rechargeable lithium battery cell were manufactured in the same manner as in Example 1 with a difference that 100 parts by weight of artificial graphite and 0.1 parts by weight of the compound represented by Chemical Formula 1-1 were mixed.

### Example 4

A negative electrode and a rechargeable lithium battery cell were manufactured in the same manner as in Example 1 with a difference that 100 parts by weight of artificial graphite and 0.5 parts by weight of the compound represented by Chemical Formula 1-1 were mixed.

### Example 5

A negative electrode and a rechargeable lithium battery cell were manufactured in the same manner as in Example 1 with a difference that 100 parts by weight of artificial graphite and 1 part by weight of the compound represented by Chemical Formula 1-1 were mixed.

### Comparative Example 1

A negative electrode was manufactured by mixing 97.3 wt% of an artificial active material, 0.9 wt% of carboxymethyl cellulose, and 1.3 wt% of a styrene butadiene rubber, and 0.5 wt% of carbon black to prepare a negative electrode active material layer slurry, coating the negative electrode active material layer slurry on a copper foil current collector, and subsequently drying and compressing the negative electrode.

Except for using the negative electrode, a rechargeable lithium battery cell was manufactured in the same manner as in Example 1.

### Comparative Example 2

A negative electrode and a rechargeable lithium battery cell were manufactured in the same manner as in Example 1 with a difference that a compound represented by Chemical Formula 2 below was used instead of the compound represented by Chemical Formula 1-1:

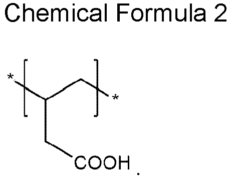

The compound represented by Chemical Formula 2 had a weight average molecular weight of 100,000 g/mol according to the GPC method.

### Evaluation Example 1: Surface Observation of Negative Electrode

Each surface of the negative electrodes of Example 1 and Comparative Example 2 was examined with a scanning electron microscope (SEM).

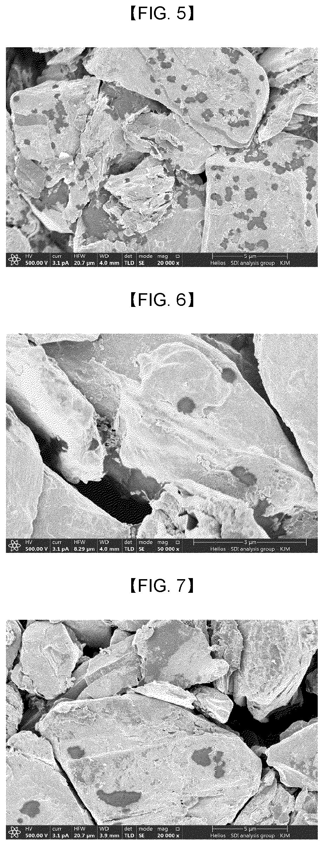

FIG. 5 is an SEM photograph of the negative electrode of Example 1 magnified 20,000 times, and FIG. 6 is an SEM photograph of the negative electrode of Example 1 magnified 50,000 times.

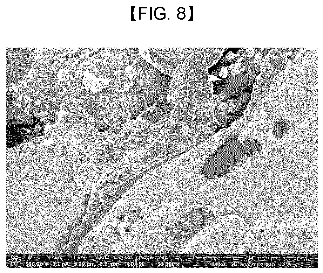

FIG. 7 is an SEM photograph of the negative electrode of Comparative Example 1 magnified 20,000 times, and FIG. 8 is an SEM photograph of the negative electrode of Comparative Example 1 magnified 50,000 times.

In FIGS. 7 and 8, the styrene-butadiene rubber (SBR) binder, illustrated by the darker areas on the image, was observed to be unevenly stretched on the surface of the negative electrode active material, but in FIGS. 5 and 6, the SBR binder was observed to be substantially uniformly distributed in a circular shape on the surface of the negative electrode active material.

### Evaluation Example 2: Evaluation of Ion Resistance (Rᵢₒₙ) of Negative Electrode

Two negative electrodes with a reaction area of 10 cm² were manufactured by using each of the negative electrodes of Examples 1 to 5 and Comparative Examples 1 and 2, and subsequently used with the same separator and electrolyte solution as used in Example 1 to manufacture pouch-type negative electrode symmetric cells. The negative electrode symmetric cells were evaluated with respect to ion diffusion resistance (Rᵢₒₙ) from a slope of a curve obtained 12 hours later after injecting the electrolyte solution by using Electrochemical Impedance Spectroscopy (EIS) under the conditions (Frequency range = 1000 kHz to 10 mHz, Amplitude = 14.1 mV, N_{d} = 6 to10 points per decade, E Range = -1 V; 1 V (± bi-directions with reference to 0 V)). The results are shown in Table 1.

**Table 1**

| | Ion resistance of negative electrode (Ω) |
|---|---|
| Example 1 | 9.4 |
| Example 2 | 8.7 |
| Example 3 | 9.0 |
| Example 4 | 9.5 |
| Example 5 | 9.8 |
| Comparative Example 1 | 10.6 |
| Comparative Example 2 | 11.2 |

Referring to Table 1, compared to the negative electrodes of Comparative Examples 1 and 2, the negative electrodes of Examples 1 to 5 exhibited reduced ion resistance (Rᵢₒₙ).

### Evaluation Example 3: Rate Capability of Rechargeable Lithium Battery Cell

The rechargeable lithium battery cells of Examples 1 to 5 and Comparative Examples 1 and 2 were three times measured with 2 C CC charge capacity to 0.2 C CC charge capacity at 25 °C. The average values are shown in Table 2. Charge rate capability (%) = 100 * (2 C CC charge capacity)/(0.2 C CC charge capacity)

**Table 2**

| | Charge rate capability (%) |
|---|---|
| Example 1 | 58.5 |
| Example 2 | 62.1 |
| Example 3 | 60.8 |
| Example 4 | 59.0 |
| Example 5 | 57.9 |
| Comparative Example 1 | 54.3 |
| Comparative Example 2 | 51.0 |

Referring to Table 2, compared to the rechargeable lithium battery cells of Comparative Examples 1 and 2, the rechargeable lithium battery cells of Examples 1 to 5 exhibited improved charge rate capability.

Comprehensively considering Tables 1 and 2, a negative electrode for a rechargeable lithium battery according to some example embodiments, which was represented by Examples 1 to 5, exhibited a reduced ion resistance (Rᵢₒₙ), because a binder was substantially uniformly distributed in the negative electrode active material layer, and thus, improved the rate capability of the rechargeable lithium battery.

While this disclosure has been described in connection with what is presently considered to be practical example embodiments, it is to be understood that the disclosure is not limited to the disclosed example embodiments, but, on the contrary, is intended to cover various modifications and equivalent arrangements included within the spirit and scope of the appended claims.

**<Description of Symbols>**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A negative electrode (20) for a rechargeable lithium battery (100), the negative electrode (20) comprising:
a negative electrode current collector; and
a negative electrode active material layer located on the negative electrode current collector and including a negative electrode active material and a binder,
wherein the negative electrode active material includes:
a core including a material capable of reversibly intercalating and deintercalating lithium ions; and
a surface treatment layer located on a surface of the core and including a compound represented by Chemical Formula 1: 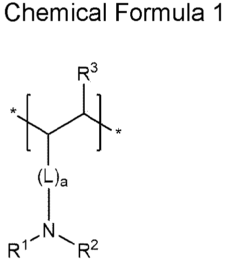 wherein, in Chemical Formula 1,
R¹ to R³ each independently include at least one of a hydrogen atom, a halogen atom, a substituted or unsubstituted alkyl group having 1 to 20 carbon atoms, a substituted or unsubstituted aryl group having 6 to 20 carbon atoms, and a substituted or unsubstituted heterocycloalkyl group having 6 to 20 carbon atoms;
L includes at least one of a single bond, a substituted or unsubstituted alkylene group having 1 to 20 carbon atoms, a substituted or unsubstituted arylene group having 6 to 20 carbon atoms, and a substituted or unsubstituted heterocycloalkylene group having 6 to 20 carbon atoms; and
"a" is an integer in a range of 1 to 10.

2. The negative electrode (20) as claimed in claim 1, wherein R¹ to R³ are all hydrogen atoms.

3. The negative electrode (20) as claimed in any of the claims 1 to 2, wherein L is a substituted or unsubstituted alkylene group having 1 to 5 carbon atoms.

4. The negative electrode (20) as claimed in any of the claims 1 to 3, wherein "a" is an integer in a range of 1 to 3.

5. The negative electrode (20) as claimed in any of the claims 1 to 4, wherein Chemical Formula 1 is represented by Chemical Formula 1-1:

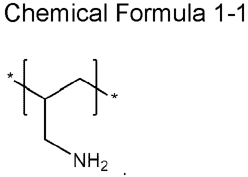

6. The negative electrode (20) as claimed in any of the claims 1 to 5, wherein the compound represented by Chemical Formula 1 has a weight average molecular weight of about 500 g/mol to about 500,000 g/mol, as measured by gel permeation chromatography (GPC).

7. The negative electrode (20) as claimed in any of the claims 1 to 6, wherein the material capable of reversibly intercalating and deintercalating lithium ions comprises at least one of crystalline carbon and amorphous carbon.

8. The negative electrode (20) as claimed in any of the claims 1 to 7, wherein a weight ratio of the core and the surface treatment layer is about 100:0.01 to about 100:1.

9. The negative electrode (20) as claimed in any of the claims 1 to 8, wherein:
the binder includes an aqueous binder, and
the aqueous binder includes at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinyl pyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, and polyvinyl alcohol.
and/or
the binder further includes a cellulose-based compound, and
the cellulose-based compound includes at least one of carboxymethyl cellulose, hydroxypropylmethyl cellulose, methyl cellulose, and an alkali metal salt thereof.

10. The negative electrode (20) as claimed in any of the claims 1 to 9, wherein based on a total amount of 100 wt% of the negative electrode active material layer:
the negative electrode active material is included in an amount of about 90 wt% to about 99 wt%,
the aqueous binder is included in an amount of about 0.5 wt% to about 5 wt%, and
the cellulose-based compound is included in an amount of about 0.5 wt% to about 5 wt%.

11. The negative electrode (20) as claimed in any of the claims 1 to 10, wherein the negative electrode active material layer further comprises a conductive material.

12. A method of manufacturing a negative electrode (20) for a rechargeable lithium battery (100), the method comprising
mixing a material capable of reversibly intercalating and deintercalating lithium ions and a compound represented by Chemical Formula 1 in a solvent to prepare a first negative electrode slurry, whereby preferably the solvent comprises water;
mixing the first negative electrode slurry and a binder to prepare a second negative electrode slurry; and
coating the second negative electrode slurry on a negative electrode current collector; and
drying the second negative electrode slurry coated on the negative electrode current collector; 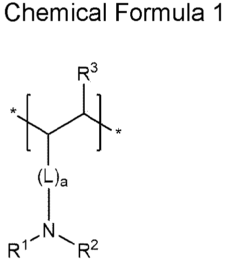 wherein, in Chemical Formula 1,
R¹ to R³ each independently includes at least one of a hydrogen atom, a halogen atom, a substituted or unsubstituted alkyl group having 1 to 20 carbon atoms, a substituted or unsubstituted aryl group having 6 to 20 carbon atoms, and a substituted or unsubstituted heterocycloalkyl group having 6 to 20 carbon atoms;
L includes at least one of a single bond, a substituted or unsubstituted alkylene group having 1 to 20 carbon atoms, a substituted or unsubstituted arylene group having 6 to 20 carbon atoms, and a substituted or unsubstituted heterocycloalkylene group having 6 to 20 carbon atoms; and
"a" is an integer in a range of 1 to 10.

13. The method as claimed in claim 12, wherein a weight ratio of the material capable of reversibly intercalating and deintercalating lithium ions and the compound represented by Chemical Formula 1 is about 100:0.01 to about 100:1.

14. The method as claimed in claim 12 or 13, wherein after drying the second negative electrode slurry coated on the negative electrode current collector, the method further comprises:
compressing the negative electrode current collector and the dried second negative electrode slurry.

15. A rechargeable lithium battery (100), comprising:
the negative electrode (20) as claimed in any of the claims 1 to 11;
a positive electrode (10); and
an electrolyte solution.
